# EUROPEAN PATENT APPLICATION

(11) **EP 3 491 963 A1**
(43) Date of publication of application: **05.06.2019**
(21) Application number: 18200991.0
(22) Date of filing: 17.10.2018
(51) Int. Cl.: A45D 44/00

(54) **SYSTEMS AND METHODS FOR IDENTIFICATION AND VIRTUAL APPLICATION OF COSMETIC PRODUCTS**

(30) Priority: 01.12.2017 US 201762593316 P; 01.03.2018 US 201815909179
(71) Applicant: Perfect Corp., 231 New Taipei City (TW)
(72) Inventor: HUANG, Jau-Hsiung, 231 New Taipei City (TW); TSENG, Wei-Hsin, 231 New Taipei City (TW)
(74) Representative: Stöckeler, Ferdinand

(57) **Abstract**

In a computing device for identifying cosmetic products and simulating application of the cosmetic products, a target image is obtained from a user, where the target image depicts at least one of a cosmetic product or an individual wearing at least one cosmetic product. The computing device accesses a database storing a plurality of sample images, each sample image having a corresponding image feature map and metadata. The computing device analyzes the target image and identifies a matching sample image among the plurality of sample images based on the image feature map. The computing device obtains an image or video with a facial region of the user via a camera and generates a user interface displaying a resulting image or video showing virtual application of the at least one cosmetic product on the user. The computing device also displays cosmetic product information to the user in the user interface.

## Description

### CROSS-REFERENCE TO RELATED APPLICATION

This application claims priority to, and the benefit of, U.S. Provisional Patent Application entitled, "A Method to Virtually Apply Cosmetic Look on User," having Serial No. 62/593,316, filed on December 1, 2017, which is incorporated by reference in its entirety.

### TECHNICAL FIELD

The present disclosure generally relates to makeup application and more particularly, to systems and methods for identifying cosmetic products and performing virtual application of cosmetic products.

### BACKGROUND

With the proliferation of smartphones, tablets, and other display devices, people have the ability to take digital images virtually any time. Smartphones and other portable display devices are commonly used for a variety of applications, including both business and personal applications. Such devices may be used to capture or receive digital images (either still images or video images) containing an image of the user's face. At times, an individual may come across an image in an advertisement or other media of an individual (*e.g*., a celebrity) depicting a desired makeup look. Without the aid of any descriptive information, the user viewing the image will generally not know where to obtain the particular cosmetic products being worn by the individual, thereby making it difficult for the user to achieve the same makeup look. Therefore, it is desirable to provide an improved technique for identifying cosmetic products and allowing the user to evaluate different makeup looks.

### SUMMARY

In a computing device for identifying cosmetic products and simulating application of the cosmetic products, a target image is obtained from a user, where the target image depicts at least one of a cosmetic product or an individual wearing at least one cosmetic product. The computing device accesses a database storing a plurality of sample images, each sample image having a corresponding image feature map and metadata, the metadata comprising cosmetic product information and cosmetic makeup parameters. The computing device analyzes the target image and identifies a matching sample image among the plurality of sample images based on the image feature map. The computing device obtains an image or video with a facial region of the user via a camera and performs virtual application of at least one cosmetic product on the image or video with the facial region of the user based on the cosmetic makeup parameters specified in metadata of the matching sample image. The computing device generates a user interface displaying a resulting image or video showing virtual application of the at least one cosmetic product on the user. The computing device displays cosmetic product information to the user in the user interface corresponding to the cosmetic product information specified in the metadata of the matching sample image.

Another embodiment is a system that comprises a memory storing instructions, at least one camera, and a processor coupled to the memory. The processor is configured by the instructions to obtain a target image from a user, the target image depicting at least one of a cosmetic product or an individual wearing at least one cosmetic product. The processor is further configured to access a database storing a plurality of sample images, each sample image having a corresponding image feature map and metadata, the metadata comprising cosmetic product information and cosmetic makeup parameters. The processor is further configured to analyze the target image and identify a matching sample image among the plurality of sample images based on the image feature map. The processor is further configured to obtain an image or video with a facial region of the user via a camera. The processor is further configured to perform virtual application of at least one cosmetic product on the image or video with the facial region of the user based on the cosmetic makeup parameters specified in metadata of the matching sample image. The processor is further configured to generate a user interface displaying a resulting image or video showing virtual application of the at least one cosmetic product on the user. The processor is further configured to display cosmetic product information to the user in the user interface corresponding to the cosmetic product information specified in the metadata of the matching sample image.

Another embodiment is a non-transitory computer-readable storage medium storing instructions to be implemented by a computing device having a processor, wherein the instructions. When executed by the processor, the instructions on the non-transitory computer-readable storage medium cause the computing device to obtain a target image from a user, the target image depicting at least one of a cosmetic product or an individual wearing at least one cosmetic product. The computing device is further configured by the instructions to access a database storing a plurality of sample images, each sample image having a corresponding image feature map and metadata, the metadata comprising cosmetic product information and cosmetic makeup parameters. The computing device is further configured by the instructions to analyze the target image and identify a matching sample image among the plurality of sample images based on the image feature map. The computing device is further configured by the instructions to obtain an image or video with a facial region of the user via a camera. The computing device is further configured by the instructions to perform virtual application of at least one cosmetic product on the image or video with the facial region of the user based on the cosmetic makeup parameters specified in metadata of the matching sample image. The computing device is further configured by the instructions to generate a user interface displaying a resulting image or video showing virtual application of the at least one cosmetic product on the user. The computing device is further configured by the instructions to display cosmetic product information to the user in the user interface corresponding to the cosmetic product information specified in the metadata of the matching sample image.

### BRIEF DESCRIPTION OF THE DRAWINGS

Various aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 is a block diagram of a computing device in which the disclosed makeup application features may be implemented in accordance with various embodiments.
FIG. 2 illustrates a schematic block diagram of the computing device in FIG. 1 in accordance with various embodiments.
FIG. 3 is a flowchart for identification of cosmetic products and virtual application of the identified cosmetic products performed by the computing device of FIG. 1 in accordance with various embodiments.
FIG. 4 illustrates target images provided by the user where the target images are captured utilizing a camera on a back of the computing device in FIG. 1 in accordance with various embodiments.
FIG. 5 illustrates identification of a matching sample image by the computing device in FIG. 1 in accordance with various embodiments.
FIG. 6 illustrates an image of the facial region of the user provided by the user where the image is captured utilizing a front-facing camera of the computing device in FIG. 1 in accordance with various embodiments.
FIG. 7 illustrates virtual application of the one or more cosmetic products identified in the target image onto the facial region of the user in accordance with various embodiments.

### DETAILED DESCRIPTION

Various embodiments are disclosed for systems and methods for facilitating the virtual application of makeup to achieve a desired makeup look. As described in more detail below, the makeup system analyzes a photo of a cosmetic product or the makeup look of an individual in a target image provided by the user, where the makeup system identifies the actual cosmetic products or comparable cosmetic products worn by the individual depicted in the target image. Upon identification of the cosmetic products, the makeup system performs virtual application of the identified cosmetic products onto the user's face, thereby allowing the user to experience the same makeup look as the makeup look of the individual depicted in the target image.

In accordance with some embodiments, the makeup system provides the user with product information (*e.g*., a Uniform Resource Locator (URL)) for the identified cosmetic products, thereby providing the user with the information for purchasing the cosmetic products in the event that the makeup look is desirable to the user. Implementing features of the present invention result in improvements over conventional cosmetic applications by accurately identifying cosmetic products worn by an individual depicted in a target image and virtually applying the identified cosmetic products to the user's face, thereby allowing the user to "try on" the same cosmetic products as those worn by the individual depicted in the target image and also allowing the user to purchase the same or comparable cosmetic products.

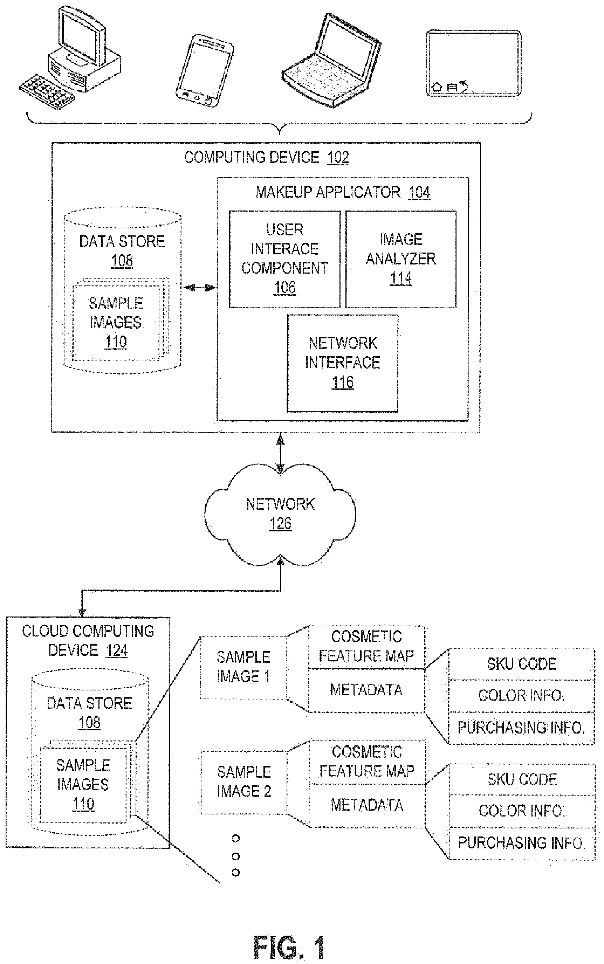

A description of a system for identification of cosmetic products and for virtual application of the identified cosmetic products is now described followed by a discussion of the operation of the components within the system. FIG. 1 is a block diagram of a computing device 102 in which the makeup application features disclosed herein may be implemented. The computing device 102 may be embodied as a computing device equipped with digital content recording capabilities, where the computing device 102 may include, but is not limited to, a digital camera, a smartphone, a tablet computing device, a digital video recorder, a laptop computer coupled to a webcam, and so on. The computing device 102 is configured to retrieve a digital representation of the user, wherein the digital representation can comprise a still image or live video of the user.

As one of ordinary skill will appreciate, the digital media content may be encoded in any of a number of formats including, but not limited to, JPEG (Joint Photographic Experts Group) files, TIFF (Tagged Image File Format) files, PNG (Portable Network Graphics) files, GIF (Graphics Interchange Format) files, BMP (bitmap) files or any number of other digital formats. The digital media content may be encoded in other formats including, but not limited to, Motion Picture Experts Group (MPEG)-1, MPEG-2, MPEG-4, H.264, Third Generation Partnership Project (3GPP), 3GPP-2, Standard-Definition Video (SD-Video), High-Definition Video (HD-Video), Digital Versatile Disc (DVD) multimedia, Video Compact Disc (VCD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), or any number of other digital formats.

A makeup applicator 104 executes on a processor of the computing device 102 and configures the processor to perform various operations relating to the identification and virtual application of cosmetic products. The makeup applicator 104 includes a user interface component 106 configured to generate a user interface that allows the user to specify a target image depicting a desired makeup look. The user interface generated by the user interface component 106 also allows the user to experience virtual application of cosmetic products identified in the target image, whereby the cosmetic products are applied to the user's face. The user interface also provides the user with purchasing information on where or how to obtain the actual cosmetic products.

The image analyzer 114 receives a target image specified by the user and analyzes attributes of the target image in order to identify one or more cosmetic products worn by the individual depicted in the target image. For some embodiments, the image analyzer 114 identifies the one or more cosmetic products by accessing a data store 108 in the computing device 102, where the data store 108 includes sample images 110 corresponding to different makeup looks achieved through the application of different cosmetic products. For some embodiments, each sample image 110 includes an image feature map and metadata. The image feature map identifies target facial features with at least one cosmetic product. For example, an image feature map for one sample image may specify a target feature comprising the lips where a particular brand and color of lipstick is applied to the lips.

The metadata comprises such information as the product stock keeping unit (SKU) code for the cosmetic product, color information associated with the cosmetic product, and purchasing information for the cosmetic product. For some embodiments, the purchasing information for the cosmetic product comprises a Uniform Resource Locator (URL) of an online retailer for a product web page selling the cosmetic product. For example, the metadata may specify the SKU code for a particular brand of lipstick, the color of that particular brand of lipstick, and a URL for an online retailer selling that particular brand and color of lipstick.

The makeup applicator 104 may also include a network interface 116 that allows the computing device 102 to be coupled to a network 126 such as, for example, the Internet, intranets, extranets, wide area networks (WANs), local area networks (LANs), wired networks, wireless networks, or other suitable networks, *etc*., or any combination of two or more such networks. For some embodiments, the data store 108 may be implemented on a cloud computing device 124, where the data store 108 is regularly updated and is accessible by other computing devices 102. For some embodiments, the computing device 102 includes a local version of the data store 108, where the makeup applicator 104 regularly accesses the data store 108 in the cloud computing device 124 through the network interface 116 to regularly update the locally stored version of the data store 108.

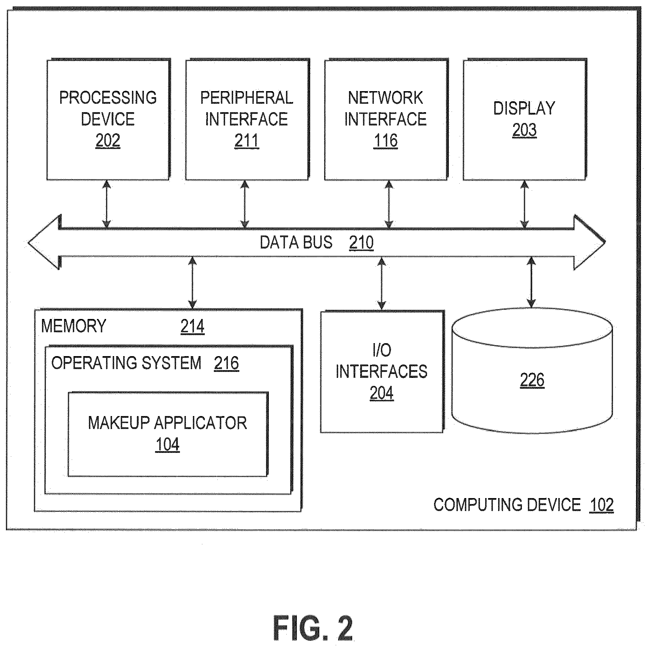

FIG. 2 illustrates a schematic block diagram of the computing device 102 in FIG. 1. The computing device 102 may be embodied in any one of a wide variety of wired and/or wireless computing devices, such as a desktop computer, portable computer, dedicated server computer, multiprocessor computing device, smart phone, tablet, and so forth. As shown in FIG. 2, the computing device 102 comprises memory 214, a processing device 202, a number of input/output interfaces 204, a network interface 116, a display 203, a peripheral interface 211, and mass storage 226, wherein each of these components are connected across a local data bus 210.

The processing device 202 may include any custom made or commercially available processor, a central processing unit (CPU) or an auxiliary processor among several processors associated with the computing device 102, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 214 can include any one of a combination of volatile memory elements (*e.g*., random-access memory (RAM, such as DRAM, and SRAM, *etc*.)) and nonvolatile memory elements (*e.g*., ROM, hard drive, tape, CDROM, *etc*.). The memory 214 typically comprises a native operating system 216, one or more native applications, emulation systems, or emulated applications for any of a variety of operating systems and/or emulated hardware platforms, emulated operating systems, *etc.* For example, the applications may include application specific software which may comprise some or all the components of the computing device 102 depicted in FIG. 1. In accordance with such embodiments, the components are stored in memory 214 and executed by the processing device 202. One of ordinary skill in the art will appreciate that the memory 214 can, and typically will, comprise other components which have been omitted for purposes of brevity.

Input/output interfaces 204 provide any number of interfaces for the input and output of data. For example, where the computing device 102 comprises a personal computer, these components may interface with one or more user input/output interfaces 204, which may comprise a keyboard or a mouse, as shown in FIG. 2. The display 203 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

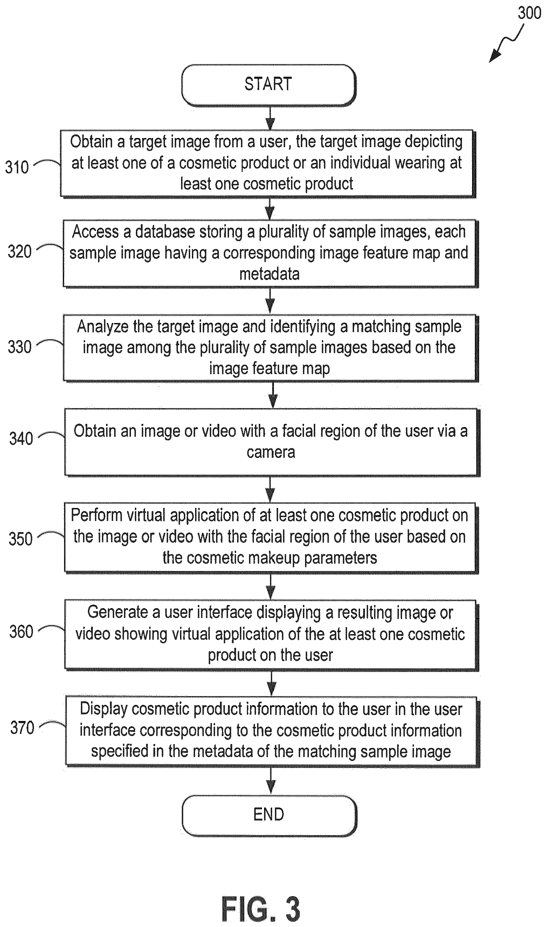

Reference is made to FIG. 3, which is a flowchart 300 in accordance with an embodiment for identification of cosmetic products and virtual application of the identified cosmetic products performed by the computing device 102 of FIG. 1. It is understood that the flowchart 300 of FIG. 3 provides merely an example of the different types of functional arrangements that may be employed to implement the operation of the various components of the computing device 102. As an alternative, the flowchart 300 of FIG. 3 may be viewed as depicting an example of steps of a method implemented in the computing device 102 according to one or more embodiments.

Although the flowchart 300 of FIG. 3 shows a specific order of execution, it is understood that the order of execution may differ from that which is depicted. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

In block 310, the computing device 102 in FIG. 1 obtains a target image from a user, where the target image depicts at least one of a cosmetic product or an individual wearing at least one cosmetic product. For some embodiments, pre-processing of the target image is performed, where pre-processing of the target image may comprise one or more of the following: a flip operation, a deskewing operation, rotation of the target image, white-balance adjustment, noise reduction, and perspective correction.

In block 320, the computing device 102 accesses a database storing a plurality of sample images, where each sample image has a corresponding image feature map and metadata. The metadata comprises cosmetic product information and cosmetic makeup parameters. For some embodiments, the database storing the plurality of sample images is maintained by a cloud-based server. For some embodiments, the image feature map of each sample image identifies target facial features wearing at least one cosmetic product. For some embodiments, the cosmetic product information of each sample image comprises a product name, a product stock keeping unit (SKU) code for at least one cosmetic product, color number and color name associated with the at least one cosmetic product, and/or purchasing information for the at least one cosmetic product. For some embodiments, the cosmetic makeup parameters comprise a color value, a make up look pattern, a transparency level, and/or a reflection rate specifying a matte appearance or a shiny appearance. For some embodiments, the purchasing information for the at least one cosmetic product comprises a Uniform Resource Locator (URL) of an online retailer for a product web page selling the at least one cosmetic product.

In block 330, the computing device 102 analyzes the target image and identifies a matching sample image among the plurality of sample images based on the image feature map. For some embodiments, the computing device 102 analyzes the target image and identifies the matching sample image among the plurality of sample images by determining whether a threshold degree of similarity is met between a feature map of at least one cosmetic product depicted in the target image and an image feature map of a matching sample image among the plurality of sample images.

For some embodiments, the computing device 102 selects the sample image with an image feature map having a highest degree of similarity with the at least one cosmetic product in the target image as the matching sample image. This step may comprise comparing a partial region to another partial region, where a partial region of the target image is compared with a partial region of a sample image. The partial regions of the target image and of the sample image may be determined based on eigenvalues/eigenvectors or distinctive features in the images. For example, one particular image may contain a partial region that depicts an object or area that can be easily distinguished from the remainder of the image. Not that the partial regions of sample images may differ from one another. Such techniques as HOG (histogram oriented gradient), SIFT (scale-invariant feature transform), LBP (local binary patterns) transformed face features, deep learning, AI (artificial intelligence) may be utilized to identify an image feature map of the target photo. The transformed face features comprise hair color, skin color, relative positions of eyes, nose, lips, and eyebrows.

In block 340, the computing device 102 obtains an image or video with a facial region of the user via a camera. For some embodiments, the target image obtained from the user is captured utilizing a camera on a back of the computing device whiles the image or video of the facial region of the user is captured utilizing a front-facing camera of the computing device.

In block 350, the computing device 102 performs virtual application of at least one cosmetic product on the image or video with the facial region of the user based on the cosmetic makeup parameters specified in metadata of the matching sample image. In block 360, the computing device 102 generates a user interface displaying a resulting image or video showing virtual application of the at least one cosmetic product on the user. In block 370, the computing device 102 displays cosmetic product information to the user in the user interface corresponding to the cosmetic product information specified in the metadata of the matching sample image. Thereafter, the process in FIG. 3 ends.

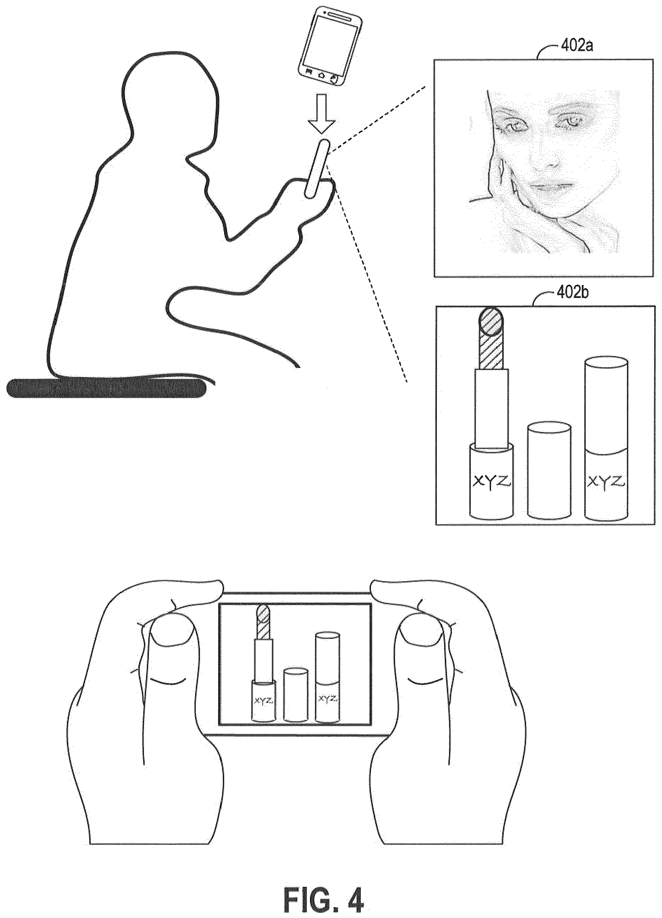

FIG. 4 illustrates target images 402 provided by the user where the target images 402 are captured utilizing a camera on a back of the computing device 102 (FIG. 1). As discussed above, the computing device 102 may be embodied as a portable device equipped with digital content recording capabilities such as a smartphone with both rear-facing and front-facing cameras. The target image 402 may comprise an image of an individual 402b wearing cosmetic products or an image of a cosmetic product 402a. Note, however, that the user is not limited to providing target images 402 that depict individuals as the target image 402 may also comprise an image of a particular product. In the examples shown, one of the target images 402 comprises an image of a lipstick product. By analyzing such attributes as the color of the lipstick product, unique markings on the lipstick product, unique packaging of the lipstick product, *etc*., the computing device 102 compares the target image 402 with the sample images 110 (FIG. 1) in the data store 108 (FIG. 1). Based on a comparison of the image feature map and metadata of each sample image 110 with the attributes of the lipstick product shown in the target image 402, the computing device 102 identifies the particular lipstick product shown in the target image (402a or 402b). In the event that an exact match is not found, the computing device 102 may provide the user with a comparable lipstick product that closely matches the lipstick product shown in the target image 402.

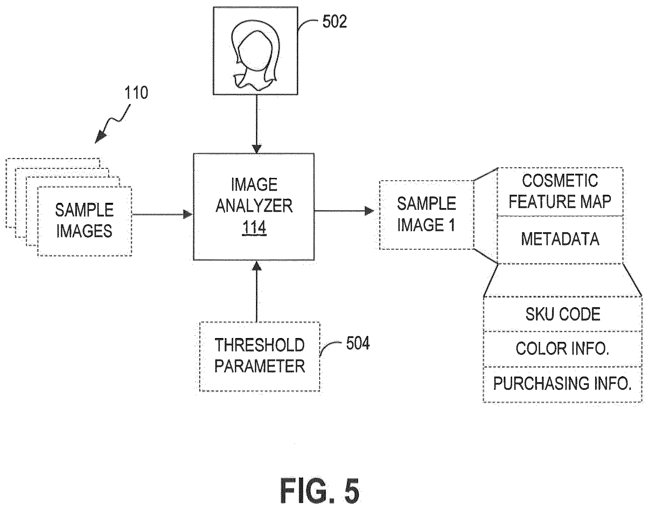

FIG. 5 illustrates identification of a matching sample image by the computing device 102 in FIG. 1. In some embodiments, the user provides a target image 502 depicting an individual wearing one or more cosmetic products. The image analyzer 114 receives the target image 502 and compares attributes of the target image 502 with the image feature map and metadata of each sample image 110 in the data store 108 of the computing device 102. For some embodiments, the image analyzer 114 utilizes a threshold parameter 504 whereby the image analyzer 114 narrows the list of matching candidate sample images 110 based on those sample images 110 that meet at least a threshold level of similarity with attributes of the target image 502. The image analyzer 114 then identifies a matching sample image 110 among the candidate sample images 110 based on the sample image 110 that shares the highest degree of similarity with attributes of the target image 502. In the event that an exact match is not identified among the sample images 110, the image analyzer 114 may provide the user with a plurality of sample images 110 that share a high degree of similarity with attributes of the target image 502 where the plurality of sample images 110 comprise sample images 110 that meet the threshold level of similarity.

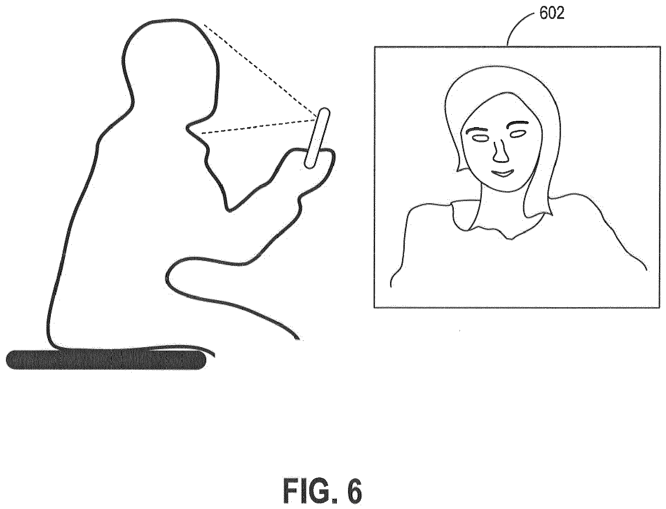

FIG. 6 illustrates an image 602 of the facial region of the user provided by the user where the image 602 is captured utilizing a front-facing camera of the computing device 102 (FIG. 1). As discussed above, the user provides an image of the facial region of the user, and the makeup applicator 104 executing on the computing device 102 then performs virtual application of the one or more cosmetic products identified by the image analyzer 114 (FIG. 1) in the target image 502 (FIG. 5) provided by the user.

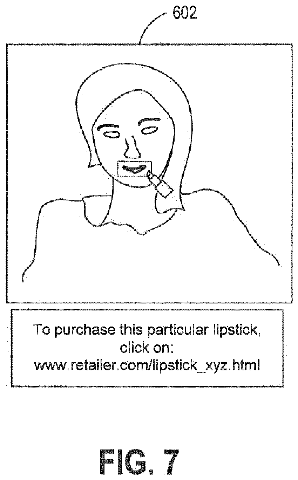

FIG. 7 illustrates virtual application of the one or more cosmetic products identified in the target image 502 (FIG. 1) onto the image 602 of the user's facial region. As shown, the computing device 102 also provides purchasing information to the user, where the purchasing information comprises a URL for an online retailer selling that particular cosmetic product.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a computing device for identifying cosmetic products and simulating application of the cosmetic products, comprising:
obtaining a target image from a user, the target image depicting at least one of a cosmetic product or an individual wearing at least one cosmetic product;
accessing a database storing a plurality of sample images, each sample image having a corresponding image feature map and metadata, the metadata comprising cosmetic product information and cosmetic makeup parameters;
analyzing the target image and identifying a matching sample image among the plurality of sample images based on the image feature map;
obtaining an image or video with a facial region of the user via a camera;
performing virtual application of at least one cosmetic product on the image or video with the facial region of the user based on the cosmetic makeup parameters specified in metadata of the matching sample image;
generating a user interface displaying a resulting image or video showing virtual application of the at least one cosmetic product on the user; and
displaying cosmetic product information to the user in the user interface corresponding to the cosmetic product information specified in the metadata of the matching sample image.

2. The method of claim 1, further comprising pre-processing the target image, wherein pre-processing the target image is performed prior to analyzing the target image and identifying the matching sample image among the plurality of sample images, and wherein pre-processing of the target image comprises at least one of: a flip operation, a deskewing operation, rotation of the target image, white-balance adjustment, noise reduction, and perspective correction.

3. The method of claim 1 or 2, wherein analyzing the target image and identifying the matching sample image among the plurality of sample images comprises determining whether a threshold degree of similarity is met between a feature map of at least one cosmetic product depicted in the target image and an image feature map of a matching sample image among the plurality of sample images.

4. The method of claim 3, wherein a sample image with an image feature map with a highest degree of similarity with the at least one cosmetic product in the target image is selected as the matching sample image.

5. The method of one of claims 1 to 4, wherein the target image obtained from the user is captured utilizing a camera on a back of the computing device, and wherein the image or video of the facial region of the user is captured utilizing a front-facing camera of the computing device.

6. The method of one of claims 1 to 5, wherein the cosmetic product information of each sample image comprises at least one of: a product name, a product stock keeping unit (SKU) code for at least one cosmetic product, color number and color name associated with the at least one cosmetic product, and purchasing information for the at least one cosmetic product.

7. The method of claim 6, wherein the purchasing information for the at least one cosmetic product comprises a Uniform Resource Locator (URL) of an online retailer for a product web page selling the at least one cosmetic product.

8. The method of one of claims 1 to 7, wherein the cosmetic makeup parameters comprise at least one of: a color value, a make up look pattern, a transparency level, and a reflection rate specifying a matte appearance or a shiny appearance.

9. The method of one of claims 1 to 8, wherein the image feature map of each sample image identifies target facial features wearing at least one cosmetic product.

10. The method of one of claims 1 to 9, wherein the database storing the plurality of sample images is maintained by a cloud-based server.

11. A system, comprising:
a memory storing instructions;
at least one camera; and
a processor coupled to the memory and configured by the instructions to at least perform a method according to one of claims 1 to 10.

12. A non-transitory computer-readable storage medium storing instructions to be implemented by a computing device having a processor, wherein the instructions, when executed by the processor, cause the computing device to at least perform a method of one claims 1 to 10.
